# FASCICULE DE BREVET EUROPEEN

(11) **EP 3 020 113 B1**
(45) Date de publication et mention de la délivrance du brevet: **10.05.2017**
(21) Numéro de dépôt: 14744377.4
(22) Date de dépôt: 26.06.2014
(51) Int. Cl.: H02J 3/00

(54) **DISPOSITIF POUR PILOTER UNE CHARGE DE PUISSANCE DANS UN RÉSEAU ÉLECTRIQUE PROCÉDÉ ET SYSTÈME ASSOCIÉS**
VORRICHTUNG ZUR STEUERUNG EINER STROMLAST IN EINEM ELEKTRISCHEN NETZ UND ZUGEHÖRIGES VERFAHREN UND SYSTEM
DEVICE FOR CONTROLLING A POWER LOAD IN AN ELECTRICAL NETWORK, AND ASSOCIATED METHOD AND SYSTEM

(30) Priorité: 08.07.2013 FR 1301618
(43) Date de publication de la demande: 18.05.2016
(73) Titulaire: Ergylink, 92300 Levallois-Perret (FR)
(72) Inventeur: GILBERT, Jerome, F-92300 Levallois Perret (FR)
(86) Numéro de dépôt international: PCT/IB2014/062632
(87) Numéro de publication internationale: WO 2015/004557

(56) Documents cités:
- EP-A1- 0 028 178
- FR-A1- 2 822 303
- US-A1- 2007 121 512
- US-A1- 2010 217 450
- US-A1- 2012 143 387

## Description

### Domaine technique

L'invention se situe dans le domaine de la gestion des réseaux d'énergie électrique.

### Etat de la technique antérieure

L'état de l'art en matière de gestion des charges de puissance dans les installations électrique terminales d'un réseau électrique consiste à asservir la mise en marche et la mise à l'arrêt de ces charges aux conditions tarifaires. Le cas le plus connu étant l'asservissement du fonctionnement d'un chauffe eau-électrique au tarif heures creuses/ heures pleines. Il en résulte que les solutions techniques mises en oeuvre pour piloter les charges de puissance dans les installations terminales sont imbriquées avec les solutions de gestion tarifaire comme le montre le brevet FR2947396. Les compteurs d'énergie intègrent généralement un récepteur de télécommande qui permet de changer les index de comptages en fonction des périodes tarifaires comme par exemple dans le brevet FR2636142. Ces compteurs à l'état de l'art comprennent un relais de commande destiné à piloter un relais de puissance externe pour asservir automatiquement l'état de fonctionnement du chauffe-eau à l'état tarifaire en cours. Dans des réseaux de distribution électriques modernes qui sont de plus en plus complexes comme le montre le brevet FR2976415, qui comprennent notamment une part de plus en plus importante de production variable et des infrastructures de distribution proches de la saturation face à des besoins en constante augmentation. Dès lors, une gestion active de la demande en énergie devient de plus en plus indispensable pour éviter les risques de défaillance des réseaux électriques pouvant aller jusqu'au blackout de régions entières.

Cette invention entre dans le cadre général dit des réseaux intelligents (« smart grid » en langue anglaise).

### Exposé de l'invention

Le but de la présente invention est de remédier au moins partiellement aux problèmes évoqués précédemment en proposant un dispositif pour piloter le fonctionnement d'une charge de puissance appartenant à une installation électrique terminale en fonction d'évènements en relation avec le fonctionnement ou la gestion d'un réseau de distribution électrique. Ce dispositif peut avantageusement être utilisé par le gestionnaire d'un réseau de distribution électrique pour le maintenir dans un état de fonctionnement optimal grâce à l'utilisation de ressources se trouvant dans les installations terminales. Il est prévu plusieurs variantes du dispositif selon l'invention qui peuvent être mises en oeuvre seules ou en combinaison dans le cadre d'un même appareil. Les installations terminales dans lesquelles il est prévu de mettre en oeuvre l'invention appartiennent à la partie dite basse tension d'un réseau électrique. Il s'agit le plus souvent de piloter des charges de puissance monophasées alimentées par une tension alternative qui est par exemple de 230 V à une fréquence de 50Hz en Europe et de 110 V à une fréquence de 60 Hz en Amérique du Nord. L'invention peut être également être mise en oeuvre dans des installations terminales triphasées, et/ou pour piloter des charges triphasées le cas échéant.

L'invention vise un dispositif pour piloter le fonctionnement d'une charge de puissance appartenant à une installation électrique terminale en fonction d'évènements qui sont en relation avec le fonctionnement ou la gestion d'un réseau de distribution électrique, le dispositif selon l'invention comprend :
- un bloc fonctionnel d'extraction d'au moins une consigne à partir de la tension de l'installation électrique terminale; et
- un bloc fonctionnel de contrôle de la charge de puissance en fonction de l'au moins une consigne.

La charge de puissance doit être comprise comme étant une charge de puissance unique ou comme une pluralité de charges élémentaires contrôlées de manière collective ou de manière différentiée.
Le contrôle de la charge de puissance doit être compris comme étant en tout ou rien c'est à dire comme étant une mise en marche ou à l'arrêt de la charge de puissance ou comme étant une mise dans des états fonctionnels intermédiaires. Les états fonctionnels dits intermédiaires appellent une puissance sur le réseau qui est non nulle et inférieure à la puissance maximale de la charge.

Le fait d'extraire l'au moins une consigne de la seule tension est particulièrement avantageux en ce que le dispositif peut être installé en tout points de l'installation électrique terminale, même en dehors du tableau électrique qui concentre en général tous les appareillages de l'installation. Il est ainsi prévu dans certaines variantes de mise en oeuvre, d'intégrer le dispositif selon l'invention directement dans des appareils électriques comprenant une ou plusieurs charges de puissance comme les chauffe-eau électriques à résistances ou thermodynamiques, les appareils de chauffage électriques à résistance, les appareils de refroidissement ou de chauffage thermodynamiques etc. Le fait d'inclure le dispositif dans l'appareil contenant au moins une charge de puissance offre en outre l'avantage de permettre une gestion plus intelligente de l'au moins une charge en tenant compte par exemple de cycles de fonctionnement internes ou de contraintes d'utilisation. Cela permet également de gérer plusieurs paliers de puissance dans la charge, de séquencer la mise en marche de l'au moins une charge dans le temps pour conserver un niveau de service minimal, de conserver l'alimentation de fonctionnalités de l'appareil qui ne concernent pas la charge de puissance etc.

Il est prévu que dispositif selon l'invention comprenne des moyens pour commuter l'alimentation l'électrique de la charge de puissance à piloter.
C'est la manière la plus simple de commander des charges de puissance externes sans intelligence associée tels que des appareils de production d'eau chaude sanitaire électrique ou des appareils de chauffage basé sur l'utilisation de résistances de puissance. Cela étant, pour les variantes de mise en oeuvre de l'invention qui sont intégrées dans des appareils ou pour le pilotage de charges de puissance nécessitant la prise en compte d'un cycle de fonctionnement, il est prévu d'ajouter une interface appropriée entre l'électronique du dispositif selon l'invention et l'électronique de gestion de la charge de puissance dans l'appareil. Une telle interface peut être par exemple basée sur l'utilisation d'un ou de plusieurs optocoupleurs.

Dans le cas où le dispositif comprend des moyens pour commuter l'alimentation l'électrique de la charge de puissance, il est avantageux que la charge soit alimentée par défaut.
Dans les variantes préférées de mise en oeuvre autonomes du dispositif qui comprennent des moyens de commutation de puissance comme par exemple un relais électromécanique ou électronique, le dispositif est agencé pour que la charge de puissance soit alimentée par les contacts normalement fermés d'un relais de sorte que l'appareil de puissance soit quand même alimenté et le service assuré en cas de panne du dispositif selon l'invention. Ceci est d'autant plus approprié que le dispositif selon l'invention est plus utile au gestionnaire du réseau électrique qu'à l'utilisateur de l'appareil.

Il est aussi prévu que le dispositif selon l'invention comprenne des moyens pour télécommander le fonctionnement d'une charge de puissance intégrée dans un appareil pouvant être commandé à distance.
Il peut s'agir d'un émetteur de télécommande sans fil dont la couche physique, par exemple infrarouge ou radiofréquence, et le codage des commandes sont agencés pour pouvoir piloter le fonctionnement d'un appareil contenant une ou plusieurs charges de puissance. Cette variante permet au dispositif selon l'invention d'être mis en oeuvre sous la forme d'un accessoire optionnel de l'appareil à commander et/ou de simplifier le couplage fonctionnel du dispositif avec un appareil externe sophistiqué. Cette variante de l'invention est particulièrement appropriée pour piloter des climatiseurs réversibles ou non qui intègrent un récepteur de télécommande. Il peut s'agir aussi d'une télécommande filaire telle qu'une interface apte au contrôle d'un ou de plusieurs appareils de puissance disposant d'une entrée de commande optionnelle dite « à fil pilote » comme des convecteurs électriques.
Il peut s'agir aussi d'une interface filaire ou sans fil entre le dispositif et un système domotique ou un système de gestion du bâtiment apte à agir sur l'état fonctionnel d'une ou de plusieurs charges de puissance dans l'installation électrique terminale concernée.

Il est prévu une première variante du dispositif dans laquelle le bloc fonctionnel d'extraction d'au moins une consigne à partir de la tension de l'installation électrique terminale est un récepteur de signaux dits de télécommande centralisée à fréquence musicale, l'au moins une consigne étant un ordre de commande à distance. Cette variante de l'invention est prévue pour être installée dans des réseaux électriques où les infrastructures de gestion tarifaires utilisent les télécommandes dites à fréquence musicale. Ce mode de télécommande repose par exemple sur des impulsions modulant en tout ou rien un signal sinusoïdal à 175 Hz ou à 188 Hz superposé à la tension du secteur, les fréquences utilisées et le codage des impulsions variant selon les pays.

Il est prévu une seconde variante du dispositif dans laquelle le bloc fonctionnel d'extraction d'au moins une consigne à partir de la tension de l'installation électrique terminale est un récepteur de signaux de télécommande transmis par courants porteurs en ligne basse tension, l'au moins une consigne étant un ordre de commande à distance.
Cette variante de l'invention est prévue pour être installée dans des réseaux électriques où les infrastructures de gestion tarifaires utilisent les transmissions par courants porteurs au moins dans leur partie basse tension desservant les installations électriques terminales. Il peut s'agir par exemple de transmissions de commandes à distance et de télérelève selon les standards IEC 61334 et IEC 62056 comme en France ou selon les autres standards qui varient selon les pays. Il est à noter que si pour les besoins de la gestion tarifaire de l'électricité les compteurs se doivent de mettre en oeuvre un transmetteur bidirectionnel à courants porteurs, des économies substantielles peuvent être faites dans le dispositif selon l'invention en n'y mettant en oeuvre que la partie réceptrice d'un transmetteur à courants porteurs. La consommation électrique propre du dispositif étant également avantageusement réduite par l'absence de partie émettrice.

Il est aussi prévu que le dispositif selon l'invention comprenne des moyens pour recevoir des signaux de télécommande transmis par radiofréquences, l'au moins une consigne étant un ordre de commande à distance.
Cette variante de l'invention est prévue pour être installée dans des réseaux électriques où les infrastructures de gestion tarifaires utilisent des moyens de transmissions par radio. Il peut s'agir de moyens de transmission radiofréquence à courte distance (ZigBee, Bluetooth, Wi-Fi ou autres standards équivalents et successeurs) ou de l'utilisation de réseaux télécom sans fils (par exemple GSM de 1G à 4 G ou équivalents et successeurs).

Bien entendu, l'utilisation de tout autre type de réseau de communication, par exemple optique, filaire ou sans fils pour transmettre des commandes aux dispositifs selon l'invention est possible sans sortir du cadre de l'invention.

L'invention prévoit en outre que le bloc fonctionnel d'extraction d'au moins une consigne à partir de la tension de l'installation électrique terminale du dispositif exploite la valeur de la tension et/ou son évolution dans le temps pour en déduire l'au moins une consigne.
Cette caractéristique peut donner lieu à une mise en oeuvre autonome dans une variante dédiée du dispositif selon l'invention. L'autonomie du dispositif dans cette variante repose sur le fait qu'il ne requière aucune commande à distance venant du gestionnaire de réseau. La détection du problème et l'action correspondante sur la charge de puissance sont en effet gérées localement dans le dispositif. La gestion entièrement décentralisée et diffuse du réseau qui découle de la mise en oeuvre de cette variante de l'invention est économe en infrastructure et particulièrement efficace en termes de temps de réaction. En outre, cette variante de l'invention peut avantageusement être combinée aux variantes précédentes. En effet, sa mise en oeuvre dans les variantes de l'invention décrites précédemment ne requière que très peu de ressources supplémentaires. En particulier lorsque l'invention est mise en oeuvre dans un microcontrôleur selon les variantes précédentes, la mise en oeuvre de cette fonctionnalité ne requière qu'un peu de logiciel et peu ou pas de composants électroniques supplémentaires. Cette variante de l'invention peut par exemple être utilisée pour permettre au réseau de s'autostabiliser plus rapidement qu'avec toute autre solution reposant sur une gestion centralisée du réseau et sur des télécommandes. Ceci en utilisant les charges de puissance des installations terminales pour amortir les oscillations pouvant naitre au sein du réseau dans certaine circonstances. Ainsi agencé, le dispositif extrait de la tension présente à ses bornes une consigne le conduisant à alimenter automatiquement pendant une période de courte durée de par exemple quelques dizaines de secondes à plusieurs minutes la charge de puissance qu'il contrôle. L'extraction de la consigne peut par exemple prendre en compte l'amplitude de la tension alimentant l'installation terminale et la vitesse de variation de cette amplitude pour correspondre à la détection d'un phénomène oscillatoire sur le réseau électrique.
Dans une autre variante de mise en oeuvre pouvant également être combinée aux précédentes, l'invention prévoit de déconnecter automatiquement les charges de puissance en cas de sous-tension anormale d'une durée supérieure à une valeur prédéterminée qui est le signe probable d'une surcharge du réseau de distribution pouvant entrainer un blackout. Des solutions d'étalement de la pointe à la reconnexion seront avantageusement mise en oeuvre, telles que celles qui seront décrites plus loin, pour éviter de recréer plus tard un phénomène de surcharge et/ou pour empêcher l'apparition de tout phénomène oscillatoire. Cette variante fonctionnelle de l'invention, si elle était mise en oeuvre de manière généralisée sur un territoire donné, est particulièrement intéressante en ce qu'elle permet la fourniture d'un service de distribution de l'électricité autoprotégé contre les risques de disjonction et permettant d'assurer un service de base permanent pour l'alimentation des appareils de faible puissance comme le froid alimentaire, l'éclairage, les appareils électroniques et les appareils de puissance ayant des cycles de fonctionnement court tels que les appareils de cuisson.

L'invention prévoit aussi que le bloc fonctionnel d'extraction d'au moins une consigne à partir de la tension de l'installation électrique terminale du dispositif exploite la valeur de la fréquence de la tension alternative et/ou son évolution dans le temps pour en déduire l'au moins une consigne. Il s'agit, comme la précédente, d'une variante dite autonome de l'invention avec laquelle elle peut d'ailleurs être avantageusement combinée. Par exemple, le dispositif peut automatiquement connecter la charge de puissance qu'il pilote lorsque la fréquence de la tension alternative devient supérieure à un seuil. Le dispositif peut aussi automatiquement déconnecter la charge de puissance qu'il pilote lorsque la fréquence de la tension alternative devient inférieure à un autre seuil. Des solutions d'étalement de la pointe à la reconnexion seront avantageusement mise en oeuvre, telles que celles qui seront décrites plus loin, pour éviter de créer plus tard un phénomène de surcharge et/ou pour empêcher l'apparition de tout phénomène oscillatoire. L'augmentation de la part de la production d'énergie électrique renouvelable et/ou décentralisée comme l'éolien ou le solaire dans le mix énergétique des réseaux électriques modernes fait courir le risque d'un décrochement en fréquence du réseau de distribution. Pour éviter ce risque, les distributeurs limitent par exemple la part des unités de production renouvelable et/ou décentralisées à environ 30%. La mise en oeuvre généralisée de dispositifs selon l'invention pourrait permettre d'augmenter la proportion de la production non conventionnelle dans le mix énergétique sans pour autant complexifier la gestion du réseau de distribution électrique ni nécessiter des investissements lourds.

Dans une variante de l'invention, la réception d'au moins une première consigne met la charge de puissance dans un état fonctionnel déterminé pour une durée indéterminée, la mise de la charge de puissance dans un autre état fonctionnel nécessitant la réception d'au moins une seconde consigne associée à cet autre état fonctionnel.
Cette variante de l'invention correspond à sa mise en oeuvre dans un contexte traditionnel de gestion centralisée du réseau électrique. Cette variante implique la transmission d'un nombre élevé de commandes à distance et appelle si possible des solutions d'adressage fines des installations terminales. Cela étant, le dispositif selon l'invention permet néanmoins au gestionnaire du réseau d'agir sur la demande en puissance indépendamment de la gestion tarifaire de l'électricité tout en partageant avec cette dernière les équipements d'infrastructure.

Dans une autre variante de l'invention, il est prévu qu'au moins un changement d'état fonctionnel de la charge de puissance soit consécutif à l'arrivée à échéance d'une temporisation.
Cette variante de mise en oeuvre de l'invention est particulièrement préférée en ce qu'elle permet de diminuer de manière drastique le volume des commandes à distance à transmettre dans le cas d'une gestion centralisée du réseau électrique.

Les durées des temporisations de l'invention sont liées aux contextes de mise en oeuvre. Elles peuvent n'être par exemple que de quelques dizaine de secondes lorsqu'il s'agit d'amortir des phénomènes oscillatoires en mettant en oeuvre un arc réflexe détection-action géré entièrement localement dans les dispositifs. Les durées des temporisations peuvent atteindre jusqu'à plusieurs heures, voir plusieurs jours, dans le cadre de la gestion centralisée des charges de puissance dans le réseau électrique par l'exploitant. La mise en oeuvre de temporisations de longue, voir de très longue durée ne pose aucun problème technique ni économique lorsqu'elle repose sur des moyens programmatiques au sein de composants tels que des microcontrôleurs.
Ainsi il est prévu que l'au moins une consigne mette la charge de puissance dans un état fonctionnel déterminé, la mise de la charge de puissance dans un autre état fonctionnel se faisant automatiquement à l'arrivée à échéance d'une temporisation.
Il est aussi prévu que l'au moins une consigne mette la charge de puissance dans un état fonctionnel déterminé à l'arrivée à échéance d'une temporisation, la mise de la charge de puissance dans un autre état fonctionnel se faisant par le biais d'au moins une autre consigne associée à cet autre état fonctionnel.
Il est également prévu que l'au moins une consigne mette la charge de puissance dans un état fonctionnel déterminé à l'arrivée à échéance d'une première temporisation, la mise de la charge de puissance dans un autre état fonctionnel se faisant automatiquement à l'arrivée à échéance d'une seconde temporisation.

L'invention prévoit que la durée de la temporisation s'inscrive dans une grille temporelle dont le nombre et la durée des pas élémentaires sont prédéterminés.

Il est prévu dans un mode de réalisation plus particulièrement préféré de l'invention que la temporisation comprenne au moins une partie variable propre à chaque dispositif.
Il s'agit dans cette variante de l'invention d'ajouter une variabilité locale au sein de chaque dispositif permettant par exemple d'étaler la pointe d'appel de puissance dans le réseau à l'arrivée à échéance des temporisations provocant la reconnexion des charges de puissance qui ont été initiées par la réception de la même commande à distance. Les solutions techniques où la variabilité sera la plus importante d'un dispositif à l'autre seront préférées, ceci pour introduire un foisonnement temporel de la plus grande amplitude possible au sein du réseau électrique.

L'invention prévoit ainsi que la temporisation comprenne au moins une partie variable calculée à partir d'une variable aléatoire.
Il s'agit d'un moyen pour générer une variabilité locale dans le but de désynchroniser les instants de reconnexion, et dans une moindre mesure les instants de déconnexion, des charges au sein d'un même réseau pour principalement réduire les risques de disjonction. En pratique la mise en oeuvre d'un générateur de nombres pseudo-aléatoires au moyen d'un algorithme simple suffit à obtenir l'effet de désynchronisation recherché.

L'invention prévoit également que la temporisation comprenne au moins une partie variable calculée en prenant en compte un numéro unique associé au dispositif ou à l'installation terminale dans laquelle il est installé.
Il s'agit d'un autre moyen pour générer une variabilité locale.

L'invention prévoit que la temporisation comprenne au moins une partie variable calculée en prenant en compte une variable locale d'environnement.
Il s'agit d'un autre moyen pour générer une variabilité locale. Cette variable d'environnement peut être de toute nature pour peu qu'elle maximise les chances qu'elle soit différente d'un dispositif à l'autre. Il peut s'agir par exemple d'une température, de la valeur d'un champ électrique etc. mesurés dans le dispositif.

L'invention prévoit que la partie variable de la temporisation soit au moins en partie utilisée dans le cadre d'une gestion des priorités dans l'accès à la puissance électrique.
Il s'agit d'un raffinement fonctionnel de l'invention permettant de reconnecter les charges de puissance selon un niveau de priorité prédéterminé par exemple en fonction de caractéristiques de l'installation terminale ou en lien avec l'utilisateur. Par exemple il peut s'agir de déterminer des priorités pour l'accès à la puissance dans le cadre d'une priorité donnée aux services public tels que ceux qui sont en rapport avec la santé. L'invention peut aussi être mise en oeuvre dans le cadre de niveaux de priorité pour l'accès à la puissance qui sont en rapport avec les services souscrits par l'utilisateur. La gestion de priorité selon l'invention peut aussi être mise en oeuvre de manière différenciée au sein d'une même installation terminale, par exemple en fonction de la nature de l'usage, les niveaux de priorité étant par exemple déterminés en fonction de l'inertie ou du cycle d'utilisation de l'appareil piloté et/ou en fonction de la puissance de la charge.

Il est aussi prévu dans l'invention que la durée de tout ou partie de la temporisation conduisant à un changement d'état fonctionnel de la charge de puissance soit modifiée par la réception d'au moins un second ordre de commande à distance au cours d'une période de temps d'une durée prédéterminée qui est décomptée à partir de la réception d'un premier ordre de commande à distance.
L'au moins un second ordre de commande à distance peut être dédié à la modification de la durée de tout ou partie de la temporisation ou il peut s'agir d'au moins une répétition d'un ordre identique au dit premier ordre. Dans ce cas, ledit premier ordre de commande à distance est différencié de ses répétitions visant à seulement modifier la durée la durée de tout ou partie de la temporisation en ce qu'il est reçu après une période de temps d'une durée supérieure à une valeur prédéterminée pendant laquelle aucun des ordres de commande à distance concernés ne doit être reçu par le dispositif.
Il est aussi prévu dans l'invention de réutiliser les mêmes ordres autant qu'il est possible de le faire sans retreindre les possibilités du système.
Par ailleurs il est prévu dans des variantes de mise en oeuvre particulièrement sophistiquées, de pouvoir modifier la valeur des temporisations non seulement à la hausse, mais aussi à la baisse, par rapport à une valeur initiale prédéterminée. Par exemple une même commande à distance interprétée par les dispositifs comme une demande de reconnexion de la charge de puissance au réseau électrique dans le cadre dudit premier ordre peut être interprétée comme un ordre d'incrémentation d'une durée élémentaire prédéterminée de la durée de la temporisation lorsqu'elle est reçue comme l'au moins un second ordre. Réciproquement, une commande interprétée comme ordre de déconnexion du réseau électrique en tant que premier ordre peut être interprétée comme ordre de décrémentation de la durée de la temporisation lorsqu'elle est reçue comme l'au moins un second ordre.
Il est aussi prévu que soit réinitialisée à chaque réception de l'au moins un second ordre de commande à distance, la fenêtre temporelle au cours de laquelle cette réception est prise en compte par le dispositif de sorte à rendre possible une modification de la durée de tout ou partie de la temporisation conduisant à un changement d'état fonctionnel de la charge sur une large plage de valeurs au moyen d'un nombre de répétitions qui n'est pas limité par la durée de la fenêtre temporelle initiale.
En outre, lorsque le système de communication utilisé pour transmettre les ordres de commandes à distance aux dispositifs offre des capacités d'adressage sélectives, il est possible de raffiner les modifications de tout ou partie des temporisations des dispositifs dans le réseau en fonction de critères définis par l'exploitant.
La gestion active des durées de temporisation des dispositifs est particulièrement efficace pour accroitre l'effet d'écrasement de la pointe d'appel de puissance dans le réseau. Elle offre en outre au gestionnaire des moyens de pilotage supplémentaires sans pour autant rendre plus complexe la gestion du réseau ni nécessiter l'utilisation d'ordres de commande à distance spécifiques supplémentaires. En effet, les systèmes de télécommandes centralisés traditionnels antérieurs à la génération « Smart grid » disposent de peu de commandes disponibles pour d'autres usages que ceux liés au comptage et à la tarification. En outre il s'agit de commandes à distance adressant un grand nombre d'installations de manière indifférenciée et par conséquent susceptible d'engendrer des pointes de grandes puissance que seule la mise en oeuvre de cette variante de l'invention permet de désagréger. Ceci permet d'obtenir un effet d'étalement dans le temps de la demande de puissance de la partie terminale du réseau électrique. Dans les systèmes plus récents où il existe des possibilités d'adressage sophistiquées allant jusqu'à la sélection d'une installation terminale unique en tant que destinataire d'une commande à distance, la mise en oeuvre de l'invention conduit à une réduction considérable du trafic et à une meilleure réactivité du système en ce que la mise en oeuvre de l'invention ne nécessite que la transmission d'une commande d'effacement des charges de puissance en diffusion générale pour une pluralité d'installations terminales. L'étalement de la pointe d'appel de puissance sans l'invention nécessiterait la transmission d'autant de commandes à distance que d'installations individuelles à remettre en puissance de manière sélective.

Il est également prévu que la réception d'un ordre de commande à distance relance les temporisations non échues, les dispositifs dont la temporisation étant arrivée à échéance restant insensible à toute nouvelle réception d'un ordre de commande à distance pendant une durée prédéterminée.
Cette variante est particulièrement efficace dans sa capacité à étaler les pointes de puissance dans un réseau électrique.

L'invention prévoit que le dispositif comprenne en outre des moyens de commande permettant à l'utilisateur de le rendre insensible, au moins temporairement, à toute consigne auquel il serait normalement sensible et/ou d'imposer au moins un état fonctionnel à la charge de puissance.
Il s'agit d'offrir la possibilité technique aux utilisateurs des appareils comprenant des charges de puissance pilotées par un dispositif selon l'invention de déroger aux impératifs de la gestion du réseau électrique en leur permettant d'imposer l'état fonctionnel de leur choix, au moins temporairement. En effet, contrairement à l'état de l'art où des charges de puissance sont gérées en fonction de la tarification de l'électricité sur une base qui doit être rigoureusement appliquée installation par installation pour des raisons contractuelles, l'invention n'est efficace pour le gestionnaire de réseau que si elle s'applique à un grand nombre d'installations. Dès lors, peut importe du point de vue du gestionnaire du réseau électrique si quelques utilisateurs choisissent de retirer leur installation des mécanismes de gestion de puissance selon l'invention. De même, des tolérances peuvent être relâchées si nécessaire pour des raisons techniques et/ou économiques dans la mise en oeuvre de l'invention par rapport aux solutions dédiées à la gestion de la tarification en ce que le système dans son ensemble est tolérant à quelques non-fonctionnements individuels épisodiques (des caractéristiques comme par exemple les seuils de sensibilité des récepteurs de télécommande ou leur immunité aux perturbations harmoniques peuvent être relâchées sans problème). Cela étant, sauf dans les cas associés à un arrêt des charges de puissance qui peuvent être permanents, il sera particulièrement préféré de mettre en oeuvre des solutions pour le retour automatique des dispositifs au mode fonctionnel selon l'invention. Par exemple un retour automatique au bout d'un temps maximum en mode dérogé ou par la survenue d'un nombre déterminé de consignes appropriées.

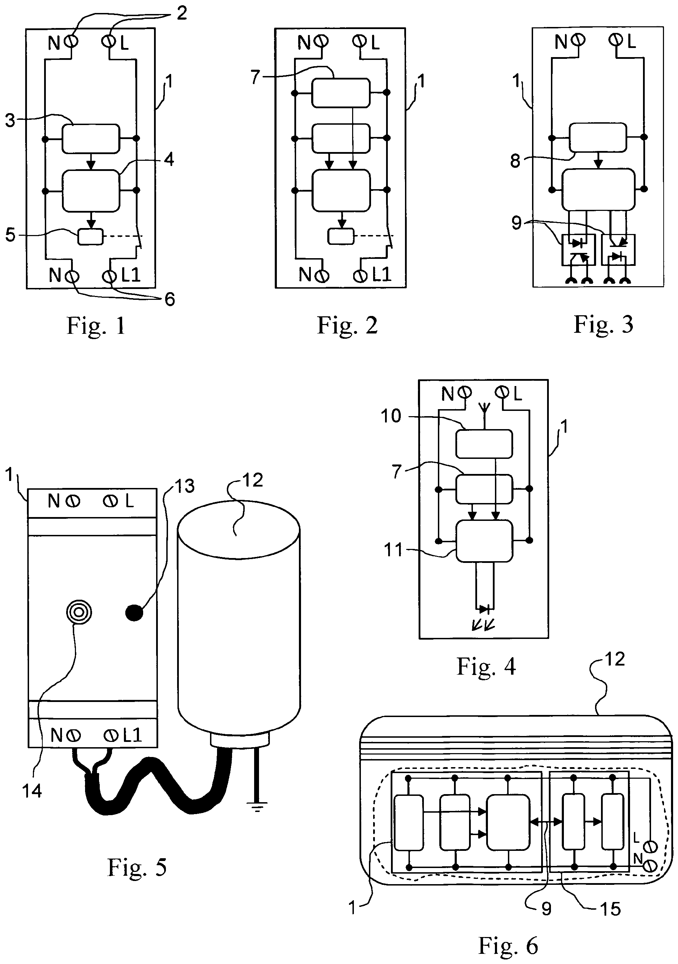

L'invention prévoit que dans un mode de mise en oeuvre particulièrement avantageux, lesdits moyens de commande sont agencés pour que la prochaine action de l'utilisateur sur ces derniers ait l'effet attendu le plus probable compte tenu de l'état fonctionnel du dispositif.
Il s'agit d'un raffinement de la caractéristique technique précédente dont le but est d'améliorer l'ergonomie d'un dispositif qui généralement est mis en oeuvre sous la forme d'un appareil relativement rustique pouvant n'avoir qu'un seul bouton et un ou deux voyants pour interagir avec l'utilisateur pour l'ensemble de ses fonctions. La description de la figure 5 illustre cette caractéristique fonctionnelle par un exemple de mise en oeuvre.

Il est en outre prévu que le dispositif selon l'invention soit installé entre les moyens prévus pour asservir le pilotage local d'une charge de puissance aux conditions tarifaires dans une installation électrique. Par exemple il est prévu dans une variante d'installation d'intercaler le dispositif selon l'invention entre la sortie du compteur d'énergie, qui est normalement prévue pour piloter une charge de puissance de l'installation telle qu'un chauffe-eau électrique, et le relais de puissance qui est normalement présent dans le tableau électrique pour commuter l'alimentation de la charge. Une sortie de pilotage d'autres charges de puissance de l'installation, par exemple des convecteurs électriques, par radiofréquence, par courants porteurs en ligne ou par fil pilote peut avantageusement être ajoutée au dispositif selon l'invention pour accroitre la puissance totale des charges gérée intelligemment selon l'invention dans cette installation en tenant compte de la tarification de l'énergie.
Dans une autre variante de l'invention combinant le pilotage d'une charge de puissance selon l'invention et la gestion tarifaire de l'énergie, il est prévu d'effectuer la combinaison au sein du même dispositif des informations de gestion de la charge de puissance selon l'invention et les information tarifaires. Cette variante « tout en un » permet une économie globale de moyens et apporte des degrés de liberté pour l'installateur par une possibilité d'installation du dispositif à proximité de la charge de puissance à piloter ou une intégration du dispositif dans l'appareil comprenant la charge de puissance. Ce dispositif pouvant comprendre aussi des moyens de commutation de puissance de l'alimentation de la charge ou une interface appropriée pour ce pilotage forme ainsi un sous système de gestion autonome de la charge de puissance tenant compte de la tarification de l'énergie électrique.

L'invention concerne aussi un procédé de gestion d'un réseau de distribution électrique spécialement conçu pour utiliser une pluralité de dispositifs pour piloter le fonctionnement d'une charge de puissance appartenant à une installation électrique terminale en fonction d'évènements en relation avec le fonctionnement ou la gestion d'un réseau de distribution électrique. Le procédé selon l'invention comprend des étapes au cours desquelles :
- On extrait au moins une consigne à partir de la tension de l'installation électrique terminale; et
- On modifie l'état fonctionnel de la charge de puissance en fonction de l'au moins une consigne; et
- On offre à l'utilisateur la possibilité d'imposer au moins un état fonctionnel à la charge de puissance pilotée par ledit dispositif et d'inhiber au moins temporairement toute modification automatique de cet au moins un état fonctionnel.

Le procédé selon l'invention prévoit en outre une étape de gestion entièrement autonome de la charge de puissance pilotée par un dispositif en fonction d'une consigne extraite localement à partir de sa tension d'alimentation. Cette étape constituant un arc reflexe local capable de temps de réaction courts entre la détection d'un évènement formant consigne qui affecte la valeur de la tension alternative alimentant le dispositif et/ou la fréquence de cette tension alternative et l'action correspondante sur la charge de puissance pilotée par le dispositif.

Le procédé selon l'invention prévoit aussi en outre une étape de désynchronisation d'au moins un changement d'état fonctionnel d'une charge de puissance pilotée par un dispositif, relativement aux changements d'état fonctionnel d'au moins une autre charge de puissance pilotée par au moins un autre dispositif au sein d'un même réseau électrique ayant un effet analogue sur le plan de la puissance appelée dans le réseau électrique.
Ceci en mettant en oeuvre par exemple les moyens de temporisation variable au sein de chaque dispositif décrits précédemment. Les changements d'état désynchronisés selon l'invention peuvent ne pas être rigoureusement identiques car ils dépendent possiblement de caractéristiques techniques spécifiques à un appareil donné comprenant une charge de puissance ou des souhaits de l'utilisateur. Ainsi seront désynchronisés des changements d'état ayant le même effet sur le plan de la puissance appelée dans le réseau électrique c'est à dire des changements d'état conduisant à appeler moins de puissance dans le réseau électrique, même s'il ne s'agit pas exclusivement de changements d'état de type mise à l'arrêt complet des charges. De même, seront désynchronisés des changements d'état conduisant à appeler davantage de puissance, même s'il ne s'agit pas exclusivement de changements d'état de type mise en marche à la puissance maximale des charges.

L'invention concerne aussi un système de gestion d'un réseau de distribution électrique qui comprend:
- une pluralité de dispositifs pour piloter le fonctionnement d'une charge de puissance appartenant à une installation électrique terminale en fonction d'évènements en relation avec le fonctionnement ou la gestion d'un réseau de distribution électrique ; et
- un réseau de distribution électrique auquel ladite installation électrique terminale est raccordée et dont la tension au point de raccordement est susceptible de permettre l'extraction d'au moins une consigne dans chacun desdits dispositifs.

Il est prévu que le système selon l'invention comprenne en outre au moins un logiciel de gestion basé sur la modélisation du comportement des dispositifs au sein du réseau électrique pour l'aide à la conduite du réseau et/ou dans le cadre d'une conduite automatisée du réseau de distribution électrique. En effet, les dispositifs pour piloter le fonctionnement d'une charge de puissance installés dans un réseau et le procédé associé ont un fonctionnement déterministe qu'il est possible de modéliser. Dès lors, un logiciel mettant en oeuvre le modèle comportemental du système selon l'invention est avantageux pour prévoir les actions de pilotage à distance à mettre en oeuvre par l'exploitant du réseau ainsi que leur chronologie en fonction des contraintes d'exploitation du moment. Les contraintes d'exploitation peuvent être par exemple les prévisions de puissance électrique totale disponible dans le réseau ou dans la partie du réseau concernée par les dispositifs à piloter et la puissance demandée correspondante qui est prévue au cours de la même période. Il est également prévu de tenir compte de la gestion tarifaire de l'énergie électrique dans le cadre d'un pilotage particulièrement optimisé du système.
Dans une variante de mise en oeuvre préférée de l'invention, le logiciel de conduite du système selon l'invention est connecté aux moyens de télécommande utilisés pour transmettre des ordres aux dispositifs dans le réseau de distribution électrique concerné et au système de conduite et de supervision qui se trouve en amont pour permettre une conduite automatisée du système selon l'invention.
Ainsi il est prévu que le procédé selon l'invention comprenne en outre une étape de mise en oeuvre d'au moins un logiciel de gestion basé sur la modélisation du comportement des dispositifs selon l'invention au sein du réseau électrique pour l'aide à la conduite du réseau et/ou dans le cadre d'une conduite automatisée du réseau de distribution électrique.

### Brève description des dessins

D'autres avantages et caractéristiques de l'invention apparaîtront à l'examen de la description détaillée de modes de mise en oeuvre nullement limitatifs, et des dessins annexés où :
- La figure 1: illustre une première variante du dispositif.
- La figure 2: illustre une seconde variante du dispositif.
- La figure 3: illustre une troisième variante du dispositif.
- La figure 4: illustre une quatrième variante du dispositif.
- La figure 5: illustre un dispositif pilotant une charge de puissance externe.
- La figure 6: illustre l'intégration d'un dispositif dans un appareil de puissance.
- La figure 7: illustre un réseau électrique comprenant des dispositifs.
- La figure 8: illustre une variante autonome exploitant la valeur de tension.
- La figure 9: illustre une variante autonome exploitant la fréquence.
- La figure 10: illustre des variantes de changement d'état de la charge.
- La figure 11: illustre une variante où la temporisation est de durée variable.
- La figure 12: illustre une variante où la variabilité vient de l'environnement.
- La figure 13: illustre une variante où des temporisations sont relancées.
- La figure 14: illustre une variante avec gestion de priorités.
- La figure 15: illustre une variante préférée de réalisation du dispositif.
- La figure 16: illustre une autre variante préférée de réalisation du dispositif.

### Meilleure manière de réaliser l'invention

Pour piloter le fonctionnement d'une charge de puissance appartenant à une installation électrique terminale en fonction d'évènements en relation avec le fonctionnement ou la gestion d'un réseau de distribution électrique, comme par exemple un déficit ou un excédent de production résultant d'une panne ou d'aléas caractéristiques des sources d'énergie à production intermittente, la meilleure manière de réaliser l'invention repose sur la combinaison de l'exploitation de la valeur de la fréquence de la tension alternative et/ou son évolution dans le temps, qui renseigne le dispositif sur l'équilibre global du réseau électrique, et de l'exploitation de la tension et/ou son évolution dans le temps, qui renseigne le dispositif sur l'équilibre local du réseau électrique. Par exemple la plage de fréquence sans effet sur le dispositif est encadrée par une limite basse en dessous de laquelle la charge pilotée est automatiquement déconnectée du réseau électrique et une limite haute au dessus de laquelle la charge est automatiquement connectée au réseau.

En outre, la tension du réseau est testée continûment pour au moins déconnecter automatiquement la charge en dessous d'une limite basse.

Dans certaines variantes de mise en oeuvre préférées, la charge pilotée est automatiquement connectée au réseau au dessus d'une limite haute si ses caractéristiques techniques lui permettent de supporter des surtensions. Certaines variantes encore plus préférées, mettent en oeuvre un algorithme de suivi de l'évolution de la tension dans le temps pour agir sur la charge pilotée en conséquence avant que la tension ou la fréquence n'atteignent un seuil critique. En effet, les réseaux de distribution électriques comprennent généralement des automatismes tels que des transformateurs régleurs en charge, c'est à dire une pluralité de transformateur à rapport de transformation variable piloté par un automate, ainsi que des bancs de condensateurs gérés aussi par des automates. Ces moyens techniques qui participent au réglage de la tension dans les branches terminales des réseaux électriques, et qui reposent sur des commutations discrètes, produisant des changements de tension par paliers aisément exploitables par les dispositifs selon l'invention. L'invention prévoit aussi de suivre l'évolution de la tension lorsque les moyens mis en oeuvre pour son réglage sont à variation continue comme dans le cas de moyens de production décentralisés pilotables.

Des algorithmes appropriés sont par exemple mis en oeuvre pour détecter l'apparition d'un déséquilibre entre production et consommation ainsi que le sens du déséquilibre, à partir du sens d'évolution de la tension et de l'évolution des temps entre chaque palier ou encore de la vitesse de variation continue de la tension. Lesdits algorithmes sont par exemple aptes à discriminer la signification d'une hausse de la tension d'alimentation du dispositif selon l'évolution de la tension dans le temps. En effet, si la variable temps n'est pas prise en compte, la hausse de la valeur de la tension peut signifier, à l'extrémité supérieure de la plage de réglage automatique, une surtension résultant d'un excédent de production qui appelle une connexion de la charge pilotée pour charger le réseau. Elle peut aussi signifier la chute de la tension dans les parties haute et moyenne tension du réseau causée par une consommation d'énergie supérieure à la production, cette chute de la valeur de la tension étant compensée dans les branches terminales du réseau par les automatismes de réglage de la tension en charge. Dans ce dernier cas, l'action appropriée pour le dispositif est la déconnexion de la charge pilotée. L'invention permet ainsi d'agir de manière appropriée sur la charge pilotée avant qu'une limite basse ou haute de la fréquence ou de la tension ne soit atteinte. Le temps de réaction du dispositif est en effet une caractéristique importante dans la mesure où, plus il est court, moins la réserve primaire du réseau est sollicitée en cas de déficit de production et moins grandes sont les pertes d'énergie en cas de surproduction.

Il est avantageusement prévu dans certaines variantes préférées de mise en oeuvre un foisonnement temporel selon l'invention pour le retour à l'état fonctionnel initial de la charge.

Certaines variantes préférées de mise en oeuvre de l'invention comprennent en outre des moyens pour recevoir des signaux de télécommande dont l'effet sur l'état fonctionnel de la charge pilotée est, selon les variantes retenues et/ou selon les ordres de télécommande reçus, au même niveau de priorité, prioritaire ou à un niveau de priorité inférieur à celui de l'au moins une consigne extraite à partir de la fréquence et/ou de la tension.

Dans certaines variantes préférées, la réception de commandes à distance est aussi prévue pour imposer des modalités d'exploitation au dispositif selon l'invention tels que des durées, des gammes de durées ou des modalités prédéterminées pour le retour à l'état fonctionnel initial après la réception d'une télécommande de changement d'état et/ou après un changement d'état sur décision autonome du dispositif résultant de l'exploitation de la valeur de la fréquence de la tension alternative et/ou son évolution dans le temps, et/ou de l'exploitation de la tension et/ou son évolution dans le temps. L'invention, en particulier lorsqu'elle est réalisée de la meilleure manière, est particulièrement apte à permettre à tout instant le maintien de l'équilibre entre la puissance produite et la puissance consommée dans un réseau électrique en agissant sur la consommation par un pilotage approprié d'une pluralité de charges de puissance.

### Description détaillée des figures et des modes de réalisation

D'autres particularités et avantages de l'invention apparaîtront encore dans la description ci-après. Aux dessins annexés donnés à titre d'exemples non limitatifs :
La **figure 1** illustre une première variante du dispositif 1 connecté à la tension de l'installation électrique 2 entre phase et neutre pour son alimentation de puissance et pour l'extraction d'au moins une consigne. Cette variante comprend un récepteur de télécommande centralisée à fréquence musicale 3, un bloc fonctionnel de contrôle 4 d'un relais 5 alimentant ou non une charge de puissance externe par l'intermédiaire d'un connecteur 6 en fonction des commandes reçues.
La **figure 2** illustre une seconde variante du dispositif 1 qui ajoute à la variante de la figure 1 un bloc fonctionnel 7 d'extraction de consignes à partir de l'analyse de la valeur de la tension et de sa fréquence.
La **figure 3** illustre une troisième variante du dispositif 1 qui se différencie de la variante de la figure 1 par la présence d'un récepteur de télécommande par courants porteurs basse tension 8 et d'une interface assurant la continuité fonctionnelle avec l'électronique de contrôle d'un appareil 12 comprenant une charge de puissance. Cette interface utilise des optocoupleurs 9. Un premier optocoupleur permet au dispositif selon l'invention d'agir sur la charge de puissance par l'intermédiaire de l'électronique de contrôle de l'appareil. Un second optocoupleur permet l'utilisation des moyens de commande de l'appareil, comme par exemple un clavier et un écran existant, pour régler des paramètres de fonctionnements du dispositif selon l'invention. Tout protocole de transmission connu de l'homme du métier peut être utilisé pour assurer une communication unidirectionnelle dans le sens allant du dispositif vers la charge de puissance, ou une communication bidirectionnelle dans des variantes plus sophistiquées exploitant l'interface homme-machine de l'appareil d'accueil pour permettre à l'utilisateur de commander ou de paramétrer le dispositif selon l'invention.
La **figure 4** illustre une quatrième variante du dispositif 1 qui se distingue des précédentes par la présence d'un récepteur de télécommande par radiofréquence 10 permettant de recevoir des commandes de gestion du réseau électrique dans les réseaux électriques où des solutions de transmission par radio ont été retenues pour communiquer avec les installations terminales. Cet exemple comprend un bloc fonctionnel 7 d'extraction de consignes à partir de l'analyse de la valeur de la tension et/ou de sa fréquence. Il comprend également un émetteur de télécommande qui permet de piloter la charge de puissance par l'intermédiaire de l'électronique de contrôle de l'appareil qui la contient sans avoir à la modifier. Les caractéristiques de l'émetteur de télécommande sont adaptées à celles des appareils à piloter. Cet exemple met en oeuvre un projecteur infrarouge dit « IR blaster » qui est suffisamment puissant et omnidirectionnel pour exploiter les réflexions sur le plafond et sur les murs et ainsi permettre une installation aisée sans réglage précis de son orientation dans la pièce où se trouve l'appareil à piloter.
La **figure 5** illustre un dispositif selon l'invention pilotant un appareil externe 12 comprenant une charge de puissance comme par exemple un chauffe-eau électrique. Le dispositif est dans cet exemple encapsulé dans un boitier standard modulaire de type « rail DIN » prévu pour une installation dans un tableau électrique. Tout autre type de boitier ainsi qu'une installation volante ou encastrée au pied de la charge de puissance sont également rendus possibles par les caractéristiques techniques de l'invention. Le dispositif dans cet exemple comprend un bouton 13 qui permet à l'utilisateur d'imposer l'état fonctionnel de son choix à la charge de puissance. Au moins un voyant 14 ou un écran permet à l'installateur de paramétrer le dispositif selon l'invention lors de la première installation. Ces moyens de retour d'information permettent ensuite à l'utilisateur de connaitre l'état fonctionnel du dispositif et de la charge de puissance qu'il pilote. Dans cet exemple non limitatif, il est prévu que l'utilisateur puisse sélectionner avec le bouton 13 les quatre états fonctionnels que sont « réception de commandes à distance du réseau électrique activée et charge alimentée », « réception de commandes à distance du réseau électrique activée et charge non alimentée », « réception de commandes à distance du réseau électrique désactivée et charge alimentée », « réception de commandes à distance du réseau électrique désactivée et charge non alimentée ». L'état fonctionnel correspondant est affiché sur le voyant 14, respectivement, clignotement rapide, clignotement lent, allumage permanent, extinction permanente. Cet exemple met en oeuvre des raffinements destinés à compenser les limitations des moyens physiques mis au service de l'ergonomie. Ainsi le mode de fonctionnement, où le dispositif est insensible aux commandes du réseau et où la charge de puissance est alimentée, est maintenu temporairement par une temporisation dont l'arrivée à échéance provoque la réactivation automatique de la réception des commandes du réseau. Lorsque le bouton n'a pas été pressé depuis plus de 10 s, le prochain appui est directement le plus probable partant de l'état fonctionnel en cours. Ainsi, lorsque l'appareil se trouve dans l'état « réception de commandes à distance du réseau électrique activée et charge alimentée » ou dans l'état « réception de commandes à distance du réseau électrique activée et charge non alimentée » et que le bouton n'a pas été pressé depuis plus de 10s alors le prochain appui sur le bouton impose l'état le plus probable qui est « réception de commandes à distance du réseau électrique désactivée et charge non alimentée ». De même, partant de ce dernier état, un seul appui sur le bouton après au moins 10s d'inactivité du clavier conduit directement à l'état le plus probable qui est « réception de commandes à distance du réseau électrique activée et charge alimentée ». Lorsque les appuis sur le bouton se succèdent à un rythme tel que les 10s d'inactivité du clavier ne sont pas atteintes, tous les états fonctionnels possibles sont explorés en séquence bouclée. Bien entendu, les choix de mise en oeuvre peuvent être différents sans pour autant sortir du cadre de l'invention.
La **figure 6** illustre l'intégration d'un dispositif 1 dans un appareil 12 comprenant une charge de puissance. Le dispositif selon l'invention peut ne pas prendre la forme d'un appareillage en tant que tel. Il peut être intégré directement dans le sous-ensemble électronique d'un appareil comprenant une charge de puissance comme dans cet exemple, un appareil de chauffage ou de climatisation. L'intégration du dispositif 1 dans l'appareil 12 peut être complète sur le plan fonctionnel et rendue physiquement non distinguable de l'électronique de contrôle native de l'appareil, ceci en particulier lorsque l'invention est mise en oeuvre principalement sous la forme de logiciel dans un microcontrôleur. L'intégration peut aussi être réalisée comme illustré dans la figure 6, sous la forme d'un module fonctionnel 1 distinct qui est ajouté à l'électronique native de l'appareil 15. Une interface adéquate 9 sur les plans mécanique, électrique et logique étant mise en oeuvre pour assurer l'interfonctionnement des deux sous-ensembles.

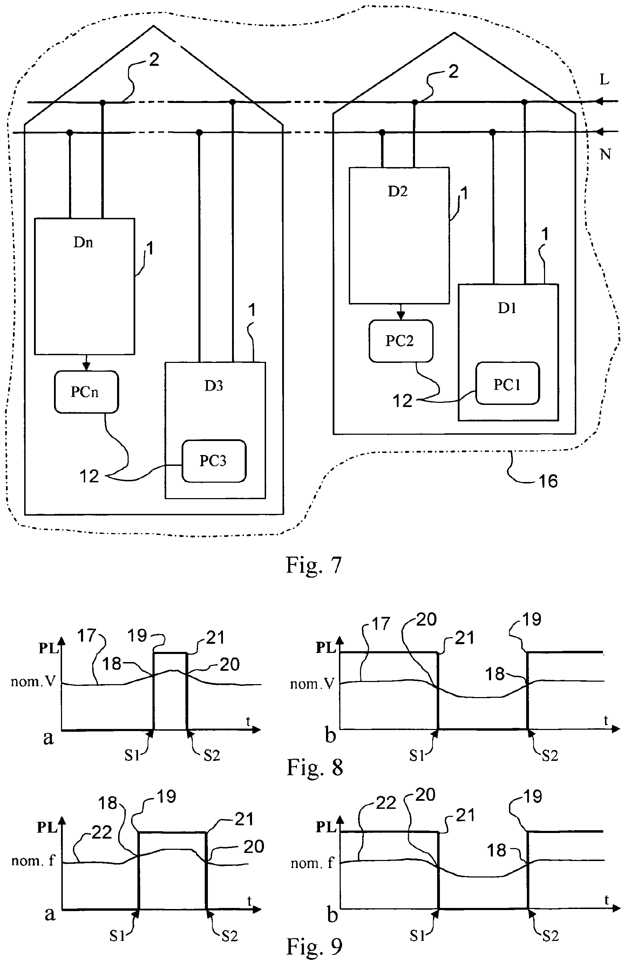

La **figure 7** illustre un réseau électrique 16 comprenant une pluralité de dispositifs 1 mis en oeuvre dans des installations terminales 2. Les dispositifs selon l'invention pilotent des charges de puissance comprises dans des appareils 12 qui leur sont externes ou les dispositifs sont intégrés dans des appareils 12 comprenant au moins une charge de puissance.
La **figure 8** illustre le comportement d'une variante autonome du dispositif selon l'invention qui exploite la valeur de tension pour en extraire la consigne de pilotage de la charge de puissance. Dans tous les chronogrammes présentés dans les figures, le temps est porté en abscisse, on y trouve le cas échéant les instants de survenue des consignes (S, Sn...). L'état fonctionnel de la charge de puissance (PL) est porté en ordonnée. Pour clarifier l'exposé, les seuls deux états fonctionnels arrêt et marche sont représentés mais les explications valent également pour des charges de puissance ayant plus de deux états fonctionnels impliquant plusieurs niveaux de puissance appelés sur les réseaux électrique. De même, les chronogrammes qui illustrent une caractéristique technique de l'invention les états fonctionnels indiqués pour la charge de puissance ne sont en rien limitatifs, les choix appropriés des états fonctionnels seront faits en fonction du contexte de mise en oeuvre de l'invention.

Dans l'exemple a) de la figure 8, le dispositif selon l'invention reste inactif tant que les variations de la tension du réseau 17 restent dans une fourchette de valeurs considérées comme normales. Si la valeur de la tension passe au dessus d'un premier seuil 18 et/ou que la vitesse de la croissance de la valeur de la tension dépasse un second seuil alors la charge de puissance pilotée par le dispositif est alimentée 19. Lorsque la tension revient en dessous d'un troisième seuil 20, qui n'est pas nécessairement égal au premier, l'alimentation de la charge de puissance est coupée 21.

Dans l'exemple b) de la figure 8, le dispositif selon l'invention reste inactif tant que les variations de la tension du réseau 17 restent dans une fourchette de valeurs considérées comme normales. Si la valeur de la tension passe en dessous d'un premier seuil 20 et/ou que la vitesse de la décroissance de la valeur de la tension dépasse un second seuil alors l'alimentation de la charge de puissance pilotée par le dispositif est coupée 21. Lorsque la tension repasse au dessus d'un troisième seuil 18, qui n'est pas nécessairement égal au premier, l'alimentation de la charge de puissance est restaurée 19.

Il est particulièrement préféré dans l'invention d'introduire un retard de durée fortement variable d'un dispositif à l'autre. Ce retard étant introduit de préférence entre l'instant de la détection de la disparition de l'anomalie, qui est détectée de manière synchrone par tous les dispositifs dans une large partie du réseau, et le changement d'état effectif des charges de puissances. Les changements d'état seront avantageusement les plus désynchronisés possibles pour étaler les variations de puissance auxquelles doit faire face le réseau électrique dans son ensemble.

La **figure 9** illustre le comportement d'une variante autonome du dispositif selon l'invention qui exploite la valeur de la fréquence de la tension alternative du réseau pour en extraire la consigne de pilotage de la charge de puissance. Dans l'exemple a) de la figure 9, le dispositif selon l'invention reste inactif tant que les variations de la fréquence du réseau 22 restent dans une fourchette de valeurs considérées comme normales. Si la valeur de la fréquence passe au dessus d'un premier seuil 18 et/ou que la vitesse de la croissance de la valeur de la fréquence dépasse un second seuil alors la charge de puissance pilotée par le dispositif est alimentée 19. Lorsque la fréquence revient en dessous d'un troisième seuil 20, qui n'est pas nécessairement égal au premier, l'alimentation de la charge de puissance est coupée 21.

Dans l'exemple b) de la figure 9, le dispositif selon l'invention reste inactif tant que les variations de la tension du réseau 22 restent dans une fourchette de valeurs considérées comme normales. Si la valeur de la fréquence passe en dessous d'un premier seuil 20 et/ou que la vitesse de la décroissance de la valeur de la fréquence dépasse un second seuil, alors l'alimentation de la charge de puissance pilotée par le dispositif est coupée 21. Lorsque la fréquence repasse au dessus d'un troisième seuil 18, qui n'est pas nécessairement égal au premier, l'alimentation de la charge de puissance est restaurée 19.

Comme dans l'exemple de la figure 8, il est particulièrement préféré d'introduire un retard de durée fortement variable d'un dispositif à l'autre entre la disparition de l'anomalie et le changement d'état des charges de puissances qui en découle.

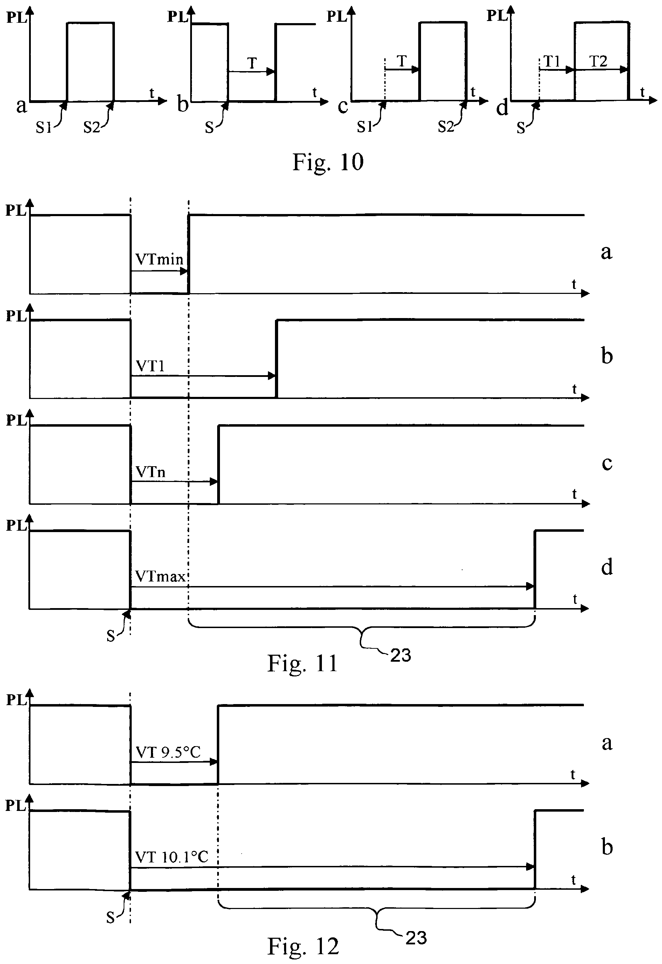

La **figure 10** a) illustre une variante du dispositif selon l'invention dans laquelle tous les changements d'état de la charge de puissance sont dus à la survenue de consignes au sens de l'invention (S1 et S2) c'est à dire à la réception de commandes à distance et/ou à la détection d'évènements affectant la valeur de la tension du réseau et/ou affectant sa fréquence ou encore à des commandes de l'utilisateur.
b) illustre une variante préférée du dispositif où le premier changement d'état de la charge de puissance est consécutif à la survenue d'une consigne (S). Le second changement d'état de la charge étant consécutif à l'arrivée à échéance d'une temporisation d'une durée T qui à été lancée lors de la survenue de la consigne (S). Cet exemple illustre le cas où une consigne impliquant un grand nombre de charges de puissance dans le réseau électrique conduit l'ensemble des charges concernées à passer à l'état d'arrêt de manière synchrone. Il peut s'agir par exemple de la détection locale d'un problème affectant la valeur de la tension du réseau et/ou affectant sa fréquence. Il peut s'agir également de la réception d'un ordre de commande à distance visant l'effacement des charges. Il est avantageux dans ce cas que le temps séparant la survenue de la consigne et le changement d'état des charges soit le plus court possible. S'agissant d'un arrêt des charges de puissance, le synchronisme de l'événement n'est pas un problème pour le réseau électrique. Le changement d'état complémentaire de la charge de puissance est géré localement dans chaque dispositif. Il est provoqué par l'arrivée à échéance d'une temporisation déclenchée par la survenue de la consigne (S).
c) illustre le cas d'un changement d'état différé. Le changement d'état de la charge est géré localement au sein de chaque dispositif par une temporisation d'une durée T, qui est lancée dès que l'évènement (S1), qui aurait dû conduire au changement d'état, se produit. Le changement d'état effectif correspondant de la charge de puissance se fait automatiquement à l'arrivée à échéance de la temporisation. Le changement d'état complémentaire se fait lors de la survenue d'une consigne appropriée (S2).
   D) illustre le cas d'un premier changement d'état différé à l'échéance d'une première temporisation de durée T1. Le changement d'état complémentaire étant géré localement au sein du dispositif à l'arrivée à échéance d'une seconde temporisation de durée T2.

La **figure 11** illustre une variante encore plus préférée de l'invention où la durée de la temporisation est variable d'un dispositif à l'autre. Cette variante introduit un élément de variabilité individuel pour chaque dispositif dans la durée de la temporisation dont l'arrivée à échéance conditionne le retour à l'état initial de la charge de puissance. L'état initial étant celui d'avant la survenue de l'évènement ayant conduit immédiatement tous les dispositifs concernés à changer d'état de manière synchrone. L'élément de variabilité est agencé pour maximiser la différentiation d'un dispositif à l'autre entre une limite basse et une limite haute permettant au gestionnaire de réseau de connaitre par avance les fenêtres temporelles maximales de chacune de ses actions. Il est ainsi possible de prévoir, par simulation au moyen d'un modèle mathématique, le comportement du réseau en cas d'anomalie ayant conduit des dispositifs à changer l'état de la charge de puissance qu'ils pilotent de manière autonome. Ainsi dans la figure 12, la courbe a) illustre la valeur minimale de la temporisation variable. Cette valeur est déterminée pour néanmoins produire un effet sur le réseau et pour protéger la charge de puissance des effets possiblement néfastes de cycles de commutation trop courts. La courbe b) illustre une première valeur de temporisation pour un dispositif donnée. La courbe c) illustre la valeur de temporisation propre au nième dispositif selon l'invention présent dans le réseau et ayant détecté le même évènement que ceux qui sont associés aux courbes a) et b). la courbe d) illustre la valeur maximale que peu prendre la temporisation variable dans le cadre d'une mise en oeuvre donnée de l'invention. La durée 23 représente l'excursion temporelle maximale de la partie variable de la temporisation.

La **figure 12** illustre une variante où la variabilité vient de l'environnement.

Les deux courbes a) et b) de la figure 12 illustrent un exemple de variable d'environnement pouvant être utilisée dans le calcul de la valeur de la temporisation de chaque dispositif. La méthode de calcul utilisée dans le programme du microcontrôleur mettant en oeuvre l'invention est agencée pour que le résultat en termes de durée de temporisation soit encadré par une valeur minimale et une valeur maximale, que la probabilité d'obtenir les mêmes valeurs soit faible et que les valeurs individuelles soit fortement différenciées les unes de autres. La durée 23 représente l'excursion temporelle maximale de la partie variable de la temporisation en fonction d'une variable d'environnement. Dans cet exemple, la température est la variable d'environnement choisie parce que son potentiel de variabilité d'un dispositif à l'autre est important et que les microcontrôleurs modernes qui comprennent un convertisseur analogique-numérique comprennent généralement aussi un moyen pour mesurer la température de la puce. Ce choix permet la mise en oeuvre de ce raffinement de l'invention à un coût marginal nul en dehors de celui du stockage du code supplémentaire nécessaire.

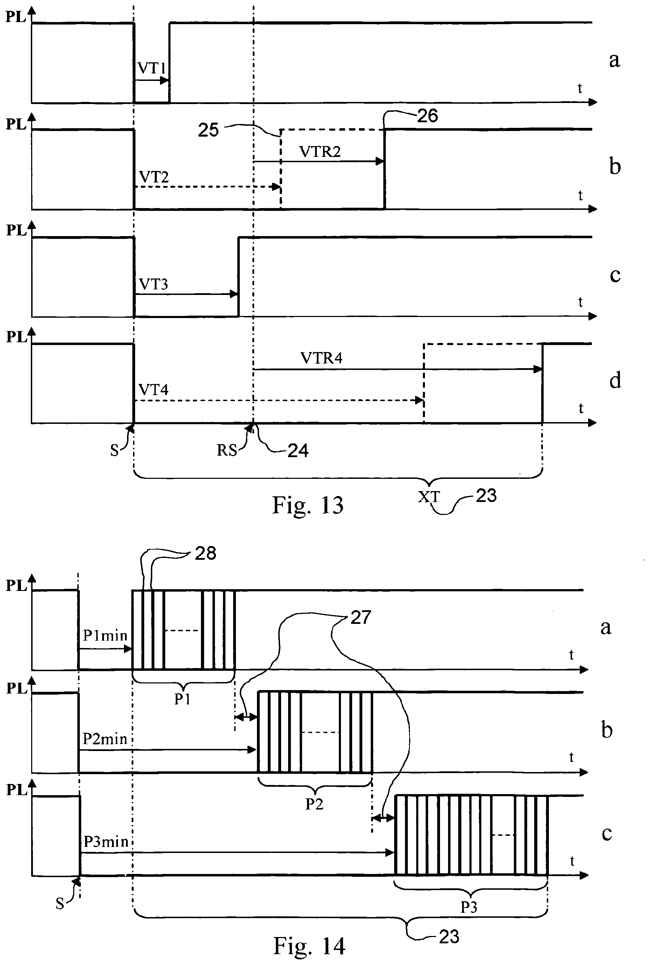

La **figure 13** illustre une variante où des temporisations sont relancées. Cette figure illustre un raffinement fonctionnel de l'invention qui permet au gestionnaire du réseau d'étaler plus encore la pointe de puissance si nécessaire en répétant la transmission de la commande initiale à des moments judicieusement choisis au moyen d'un outil d'aide à la conduite de réseau par simulation. Dans cet exemple, pour les courbes a) et c), tout se passe comme illustré précédemment par la figure 11 car leur temporisation est arrivée à échéance avant la réception d'une commande répétée 24, ou avant le réception d'une commande spécifique à la relance de temporisation le cas échéant.

Pour les courbes b) et d), les temporisations des dispositifs ne sont pas encore arrivées à échéance lorsque la nouvelle commande 24 est reçue. Le raffinement de l'invention opère alors par une relance des temporisations de ces seuls appareils. Ceci a pour effet d'étaler de plus en plus la pointe de puissance en impliquant un nombre de dispositifs qui va en diminuant jusqu'à ce qu'il ne soit plus nécessaire de répéter à nouveau la commande. La durée 23 représente l'excursion temporelle maximale de la partie variable de la temporisation après extension par la répétition des commandes.

Ce raffinement fonctionnel de l'invention accroit la flexibilité et les possibilités d'étalement des pointes de puissance sans nécessiter de moyens supplémentaires pour sa mise en oeuvre et sans accroitre de manière importante le trafic sur le réseau.

La **figure 14** illustre une variante avec gestion de priorités.

Cette figure illustre la gestion de priorités dans l'accès à la puissance électrique selon l'invention. Les dispositifs selon l'invention sont agencés pour gérer plusieurs niveaux de priorité. Chaque dispositif participant doit connaitre le niveau de priorité qui lui est affecté. Ceci peut se faire lors de la fabrication du dispositif ou de l'appareil qui le contient dans le cas des priorités dépendant des usages de l'électricité ou de la puissance de la charge. Dans les autres cas, un paramétrage local de chaque dispositif, ou encore un télé-paramétrage selon les possibilités du système de transmission d'informations du réseau, est nécessaire. Les trois chronogrammes a), b) et c) correspondent à trois niveaux de priorités gérés selon le procédé de l'invention. Le procédé est applicable à un nombre quelconque de niveaux de priorité.

Chaque niveau de priorité se voit attaché une plage temporelle au sein de laquelle toutes les temporisations des dispositifs concernés doivent arriver à échéance. Les temporisations des dispositifs qui sont associés au niveau de priorité immédiatement moins prioritaire sont avantageusement augmentées d'une valeur fixe de sécurité 27 pour éviter tout phénomène de recouvrement aux frontières des niveaux de priorité adjacents compte tenu des dérives et incertitudes dans les calculs des valeurs de temporisation. Une valeur minimale est aussi avantageusement ajoutée en tête du niveau le plus prioritaire pour les raisons expliquées dans la description de la figure 11. Cette figure illustre également la gestion des temporisations à l'intérieur d'une grille temporelle dont le nombre et la durée des pas élémentaires 28 sont prédéterminés. Ce raffinement fonctionnel facilite la modélisation des comportements du système qui est un complément intéressant de l'invention pour faciliter sa mise en oeuvre dans le cadre d'une gestion déterministe du réseau électrique.

Une temporisation s'inscrivant dans une grille temporelle n'est en rien contradictoire avec l'utilisation d'une variable d'environnement ou d'une variable pseudo-aléatoire dans le calcul des temporisations, cela indique seulement que les valeurs calculées sont discrétisées avant utilisation pour tomber dans les pas de la grille, cette dernière étant synchronisée dans tous les dispositifs concernés par l'évènement synchrone initial (S).

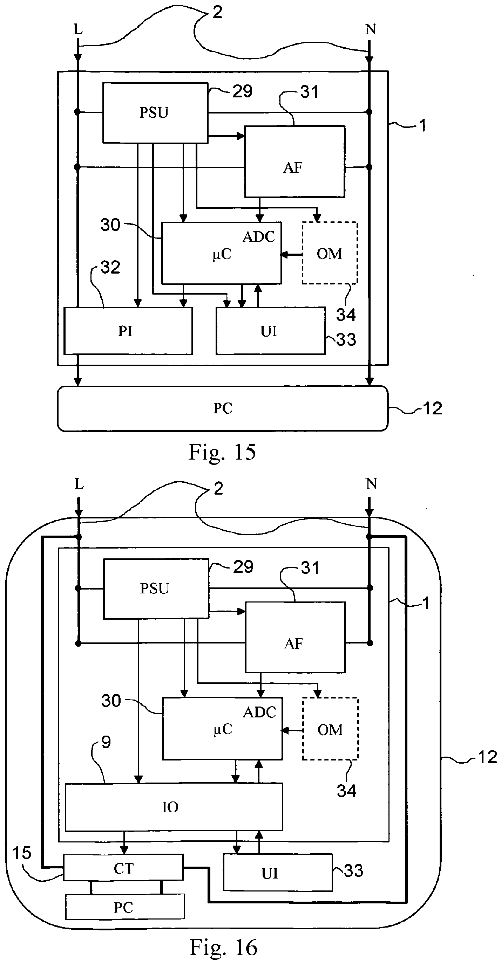

La **figure 15** illustre une variante préférée de réalisation du dispositif 1 lorsque la charge de puissance est externe.

Cette variante comprend un sous-ensemble d'alimentation basse tension 29 fournissant les tensions nécessaires au fonctionnement des autres sous-ensembles à partir de la tension du réseau électrique 2 auquel il est connecté. Au coeur du dispositif se trouve le microcontrôleur 30 qui gère les ressources du dispositif au moyen d'un logiciel contenu dans sa mémoire de programme, d'une mémoire RAM de travail, d'une mémoire non volatile destinée au stockage permanent de paramètres de fonctionnement et d'états fonctionnels, et de périphériques intégrés tels qu'un convertisseur analogique-numérique. Des modèles de la famille de microcontrôleurs 8bit AVR « tiny » d'Atmel, marques déposées, ou des modèles de la famille de microcontrôleurs 16bit « MSP430 » de Texas Instrument, marques déposées, sont particulièrement appropriés mais ce type de composants électroniques courants existe aussi chez d'autres fabricants de semi-conducteurs. Un frontal analogique 31 met en forme, et le cas échéant pré-filtre, les signaux issus de la tension électrique de l'installation avant de les convertir dans le microcontrôleur pour pouvoir effectuer les traitements numériques appropriés. Une interface de puissance 32 comprenant un relais et son électronique de commande assure un lien fonctionnel être la sortie logique correspondante du microcontrôleur et la charge de puissance à piloter. Une interface utilisateur 33 comprenant au moins un bouton poussoir et une diode led assure la communication entre le dispositif et l'utilisateur.
Le sous-ensemble optionnel 34 représente un modem à courants porteurs basse tension ou un transmetteur radio selon les caractéristiques des moyens de transmission utilisés par le distributeur d'électricité pour la gestion de son réseau. Lorsque cela sera possible, il sera préféré de ne mettre en oeuvre que les parties réceptrices des modems et transmetteurs.
La **figure 16** illustre une autre variante préférée de réalisation du dispositif lorsqu'il est intégré au sein d'un appareil 12 comprenant au moins une charge de puissance. La figure 16 diffère de la précédente en ce que le dispositif selon l'invention 1 est intégré dans un appareil dont il utilise les moyens de contrôle de puissance 15 de l'au moins une charge de puissance et les moyens d'interface avec l'utilisateur 33 qui sont souvent plus conviviaux dans un appareil sophistiqué que le simple bouton et la led prévus dans la version de base du dispositif selon l'invention.

Bien entendu, l'invention n'est pas limitée aux exemples qui viennent d'être décrits et de nombreux aménagements peuvent y être apportés sans sortir du cadre de l'invention, notamment en combinant plusieurs variantes dans la même mise en oeuvre ou en combinant différemment des éléments pris dans plusieurs exemples.

## Revendications

1. Dispositif (1) pour piloter le fonctionnement d'une charge de puissance (12) appartenant à une installation électrique terminale (2) en fonction d'évènements en relation avec le fonctionnement ou la gestion d'un réseau de distribution électrique (16), **caractérisé en ce qu'**il comprend :
- au moins un bloc fonctionnel formant des premiers moyens (3, 8, 10) pour recevoir au moins un ordre de commande à distance;
- au moins un bloc fonctionnel (7, 3, 8) exploitant la tension de l'installation électrique terminale, pour extraire au moins une consigne autonome à partir de la valeur de la tension de l'installation électrique terminale et/ou de son évolution dans le temps et/ou à partir de la valeur de la fréquence de la tension alternative de l'installation électrique terminale et/ou de son évolution dans le temps, et/ou pour recevoir au moins un ordre de commande à distance par télécommande centralisée à fréquence musicale ou par courants porteurs en ligne, l'au moins un bloc fonctionnel exploitant la tension de l'installation électrique terminale formant alors des seconds moyens (3, 8) pour recevoir au moins un ordre de commande à distance;
- un bloc fonctionnel (4) déterminant l'état fonctionnel de ladite charge de puissance pilotée (12), en fonction de l'au moins un ordre de commande à distance reçu et/ou de l'au moins une consigne autonome extraite et/ou d'une commande de l'utilisateur.

2. Dispositif selon la revendication 1, **caractérisé en ce qu'**il comprend en outre des moyens (5) pour commuter l'alimentation l'électrique (6) de la charge de puissance à piloter (12).

3. Dispositif selon la revendication 1, **caractérisé en ce qu'**il comprend en outre des moyens (11) pour télécommander le fonctionnement d'une charge de puissance intégrée dans un appareil (12) pouvant être commandé à distance.

4. Dispositif selon l'une quelconque des revendications précédente, **caractérisé en ce que** la réception d'au moins un premier ordre de commande à distance et/ou l'extraction d'une première consigne autonome met la charge de puissance dans un état fonctionnel déterminé pour une durée indéterminée, la mise de la charge de puissance dans un autre état fonctionnel nécessitant la réception d'au moins un second ordre de commande à distance et/ou l'extraction d'une seconde consigne autonome associée à cet autre état fonctionnel.

5. Dispositif selon l'une quelconque des revendications précédente, **caractérisé en ce qu'**au moins un changement d'état fonctionnel de la charge de puissance est consécutif à l'arrivée à échéance d'une temporisation.

6. Dispositif selon la revendication 5, **caractérisé en ce que** la durée de la temporisation s'inscrit dans une grille temporelle dont le nombre et la durée des pas élémentaires sont prédéterminés.

7. Dispositif selon l'une quelconque des revendications 5 ou 6, **caractérisé en ce que** la temporisation comprend au moins une partie variable propre à chaque dispositif.

8. Dispositif selon la revendication 7, **caractérisé en ce que** la partie variable de la temporisation est au moins en partie utilisée dans le cadre d'une gestion des priorités dans l'accès à la puissance électrique.

9. Dispositif selon l'une quelconque des revendications 5 à 8, **caractérisé en ce que** la durée de tout ou partie de la temporisation est modifiée par la réception d'au moins un second ordre de commande à distance au cours d'une période de temps d'une durée prédéterminée qui est décomptée à partir de la réception d'un premier ordre de commande à distance.

10. Dispositif selon l'une quelconque des revendications 5 à 9, **caractérisé en ce que** la réception d'un ordre de commande à distance relance les temporisations non échues, les dispositifs dont la temporisation étant arrivée à échéance restant insensible à toute nouvelle réception d'un ordre de commande à distance pendant une durée prédéterminée.

11. Dispositif selon l'une quelconque des revendications précédentes, **caractérisé en ce qu'**il comprend en outre des moyens de commande (13, 14) pour offrir à l'utilisateur la possibilité d'imposer au moins un état fonctionnel à la charge de puissance pilotée par ledit dispositif et/ou d'inhiber au moins temporairement toute modification automatique de cet au moins un état fonctionnel.

12. Système de gestion d'un réseau de distribution électrique, **caractérisé en ce qu'**il comprend :
- une pluralité de dispositifs selon l'une quelconque des revendications 1 à 11 pour piloter le fonctionnement d'une charge de puissance appartenant à une installation électrique terminale en fonction d'évènements en relation avec le fonctionnement ou la gestion d'un réseau de distribution électrique;
- un réseau de distribution électrique auquel ladite installation électrique terminale est raccordée et dont la tension au point de raccordement est susceptible de permettre la réception d'au moins un ordre de commande à distance et/ou l'extraction d'au moins une consigne autonome dans chacun desdits dispositifs.

13. Système selon la revendication 12, **caractérisé en ce qu'**il comprend en outre au moins un logiciel de gestion basé sur la modélisation du comportement des dispositifs au sein du réseau électrique pour l'aide à la conduite du réseau et/ou dans le cadre d'une conduite automatisée du réseau de distribution électrique.

14. Procédé de gestion d'un réseau de distribution électrique spécialement conçu pour utiliser une pluralité de dispositifs selon l'une quelconque des revendications 1 à 11, **caractérisé en ce qu'**il comprend des étapes au cours desquelles :
- On reçoit au moins un ordre de commande à distance et/ou on extrait au moins une consigne autonome à partir de la tension de l'installation électrique terminale;
- On modifie l'état fonctionnel de la charge de puissance en fonction de l'au moins un ordre de commande à distance reçu et/ou de l'au moins une consigne autonome extraite;
- On offre à l'utilisateur la possibilité d'imposer au moins un état fonctionnel à la charge de puissance pilotée par ledit dispositif et/ou d'inhiber au moins temporairement toute modification automatique de cet au moins un état fonctionnel.

15. Procédé selon la revendication 14, **caractérisé en ce qu'**il comprend en outre une étape de désynchronisation d'au moins un changement d'état fonctionnel d'une charge de puissance pilotée par un dispositif, relativement aux changements d'état fonctionnel d'au moins une autre charge de puissance pilotée par au moins un autre dispositif au sein d'un même réseau électrique ayant un effet analogue sur le plan de la puissance appelée dans le réseau électrique.

16. Procédé selon l'une quelconque des revendications 14 ou 15, **caractérisé en ce qu'**il comprend en outre une étape de mise en oeuvre d'au moins un logiciel de gestion basé sur la modélisation du comportement desdits dispositifs au sein du réseau électrique pour l'aide à la conduite du réseau et/ou dans le cadre d'une conduite automatisée du réseau de distribution électrique.

17. Utilisation du procédé selon l'une quelconque des revendications 14 à 16 pour permettre à tout instant le maintien de l'équilibre entre la puissance produite et la puissance consommée dans un réseau électrique en agissant sur la consommation par un pilotage approprié d'une pluralité de charges de puissance.

## Patentansprüche

1. Vorrichtung (1) zur Steuerung einer Stromlast (12) in einer Elektroinstallation im Endverteilerstadium (2) in Abhängigkeit von den Ereignissen im Zusammenhang mit der Funktionsweise oder der Steuerung eines Stromverteilernetz (16), die **dadurch gekennzeichnet ist, dass** sie:
- mindestens einen funktionalen Block umfasst, der die ersten Mittel (3, 8, 10) bildet, um mindestens einen Fernsteuerbefehl zu empfangen;
- mindestens einen funktionalen Block (7, 3, 8) umfasst, der die Spannung der Elektroinstallation im Endverteilerstadium auswertet, um mindestens eine autonome Information aus dem Wert der Spannung der Elektroinstallation im Endverteilerstadium und/oder ihrer Entwicklung im Zeitverlauf und/oder aus dem Wert der Frequenz der Wechselspannung der Elektroinstallation im Endverteilerstadium und/oder ihrer Entwicklung im Zeitverlauf auszulesen, und/oder um mindestens einen Fernsteuerbefehl per Tonfrequenz-Rundsteueranlage oder per Trägerfrequenzanlage zu empfangen, mindestens den einen funktionalen Block, der die Spannung der Elektroinstallation im Endverteilerstadium ausliest, was dann die sekundären Mittel (3, 8) bildet, um mindestens einen Fernsteuerbefehl zu empfangen;
- einen funktionalen Block (4), der den funktionalen Zustand der genannten gesteuerten Stromlast (12) festlegt in Abhängigkeit des mindestens einen empfangenen Fernsteuerbefehls und/oder der mindestens einen ausgelesenen autonomen Information und/oder einem Befehl des Benutzers.

2. Vorrichtung nach Anspruch 1, die **dadurch gekennzeichnet ist, dass** sie des Weiteren Mittel (5) für das Umschalten der Stromversorgung (6) der zu steuernden Stromlast (12) umfasst.

3. Vorrichtung nach Anspruch 1, die **dadurch gekennzeichnet ist, dass** sie des Weiteren Mittel (11) zur Fernsteuerung der Funktionsweise einer in einem Gerät (12) integrierten Stromlast umfasst, das fernsteuerbar ist.

4. Vorrichtung nach einem der vorgenannten Ansprüche, die **dadurch gekennzeichnet ist, dass** der Empfang mindestens eines ersten Fernsteuerbefehls und/oder das Auslesen einer ersten autonomen Information die Stromlast in einen funktionalen Zustand versetzt, der für eine unbestimmte Dauer festgelegt wird, das Versetzen der Stromlast in einen anderen funktionalen Zustand bedarf des Empfangs mindestens eines zweiten Fernsteuerbefehls und/oder des Auslesens einer zweiten autonomen Information, die mit diesem anderen funktionalen Zustand verknüpft ist.

5. Vorrichtung nach einem der vorgenannten Ansprüche, die **dadurch gekennzeichnet ist, dass** mindestens eine Änderung des funktionalen Zustands der Stromlast auf den Ablauf einer Zeitverzögerung folgt.

6. Vorrichtung nach Anspruch 5, die **dadurch gekennzeichnet ist, dass** sich die Dauer der Zeitverzögerung in einem zeitlichen Raster befindet, in dem Anzahl und Dauer der Grundschritte vorbestimmt sind.

7. Vorrichtung nach einem der Ansprüche 5 oder 6, die **dadurch gekennzeichnet ist, dass** die Zeitverzögerung mindestens einen für jede Vorrichtung variablen Bereich umfasst.

8. Vorrichtung nach Anspruch 7, die **dadurch gekennzeichnet ist, dass** der variable Bereich der Zeitverzögerung mindestens teilweise im Rahmen einer Prioritätssteuerung für den Zugriff auf die elektrische Leistung verwendet wird.

9. Vorrichtung nach einem der Ansprüche 5 bis 8, die **dadurch gekennzeichnet ist, dass** die Dauer der gesamten oder teilweisen Zeitverzögerung durch den Empfang mindestens eines zweiten Fernsteuerbefehls innerhalb eines Zeitraums einer vorbestimmten Dauer verändert wird, die ab dem Empfang eines ersten Fernsteuerbefehls berechnet wird.

10. Vorrichtung nach einem der Ansprüche 5 bis 9, die **dadurch gekennzeichnet ist, dass** der Empfang eines Fernsteuerbefehls die nicht abgelaufenen Zeitverzögerungen neu initiiert, die Vorrichtungen, deren Zeitverzögerung abgelaufen ist, reagieren während einer vorbestimmten Dauer nicht auf jedweden neuen Empfang eines Fernsteuerbefehls.

11. Vorrichtung nach einem der vorgenannten Ansprüche, die **dadurch gekennzeichnet ist, dass** sie des Weiteren Steuermittel (13, 14) umfasst, um dem Benutzer die Möglichkeit zu geben, der von der genannten Vorrichtung gesteuerten Stromlast mindestens einen funktionalen Zustand aufzuzwingen und/oder mindestens vorübergehend jede automatische Änderung des zumindest einen funktionalen Zustands zu hemmen.

12. System zur Steuerung eines Stromverteilernetzes, das **dadurch gekennzeichnet ist, dass** es:
- eine Vielzahl von Vorrichtungen umfasst nach einem der Ansprüche 1 bis 11 zur Steuerung der Funktionsweise einer Stromlast in einer Elektroinstallation im Endverteilerstadium in Abhängigkeit von Ereignissen im Zusammenhang mit der Funktionsweise oder der Steuerung eines Stromverteilernetzes;
- ein Stromverteilernetz umfasst, an das die genannte Elektroinstallation im Endverteilerstadium angeschlossen ist und deren Spannung am Anschlusspunkt geeignet ist, den Empfang mindestens eines Fernsteuerbefehls und/oder das Auslesen mindestens einer autonomen Information in jeder der genannten Vorrichtungen zu ermöglichen.

13. System nach Anspruch 12, das **dadurch gekennzeichnet ist, dass** es des Weiteren mindestens eine Steuerungssoftware umfasst, die auf der Modellierung des Verhaltens der Vorrichtungen innerhalb des Stromnetzes basiert zur Unterstützung der Steuerung des Netzes und/oder im Rahmen einer automatisierten Steuerung des Stromverteilernetzes.

14. Verfahren zur Steuerung eines Stromverteilernetzes, das speziell für die Verwendung einer Vielzahl von Vorrichtungen ausgelegt wurde nach einem der Ansprüche 1 bis 11, und das **dadurch gekennzeichnet ist, dass** es Schritte umfasst, in denen:
- Man mindestens einen Fernsteuerbefehl empfängt und/oder mindestens eine autonome Information aus der Spannung der Elektroinstallation im Endverteilerstadium ausliest;
- Man den funktionalen Zustand der Stromlast in Abhängigkeit des mindestens einen empfangenen Fernsteuerbefehls und/oder der mindestens einen ausgelesenen autonomen Information ändert;
- Man dem Benutzer die Möglichkeit bietet, der von der genannten Vorrichtung gesteuerten Stromlast mindestens einen funktionalen Zustand aufzuzwingen und/oder mindestens vorübergehend jede automatische Änderung des zumindest einen funktionalen Zustands zu hemmen.

15. Verfahren nach Anspruch 14, das **dadurch gekennzeichnet ist, dass** es des Weiteren einen Schritt der Desynchronisation mindestens einer Änderung eines funktionalen Zustands einer von einer Vorrichtung gesteuerten Stromlast umfasst in Bezug auf die Änderungen eines funktionalen Zustands mindestens einer anderen von mindestens einer anderen Vorrichtung gesteuerten Stromlast innerhalb des gleichen Stromnetzes, was zu einer ähnlichen Wirkung hinsichtlich der beanspruchten Leistung im Stromnetz führt.

16. Verfahren nach einem der Ansprüche 14 oder 15, das **dadurch gekennzeichnet ist, dass** es des Weiteren mindestens einen Schritt für die Implementierung mindestens einer Steuerungssoftware umfasst, die auf der Modellierung des Verhaltens der genannten Vorrichtungen innerhalb des Stromnetzes basiert zur Unterstützung der Steuerung des Netzes und/oder im Rahmen einer automatisierten Steuerung des Stromverteilernetzes.

17. Verwendung des Verfahrens nach einem der Ansprüche 14 bis 16, um jederzeit das Gleichgewicht zwischen der produzierten Leistung und der verbrauchten Leistung in einem Stromnetz zu gewährleisten, indem durch angemessene Steuerung einer Vielzahl von Stromlasten auf den Verbrauch hingewirkt wird.

## Claims

1. Device (1) for controlling the operation of a power load (12) belonging to a terminal electrical installation (2) according to events which are related to the operation or management of an electrical network (16), **characterized in that** it comprises:
- at least one functional block forming first means (3, 8, 10) for receiving at least one remote control command;
- at least one functional block (7, 3, 8) exploiting the voltage of the terminal electrical installation for extracting at least one autonomous setpoint from the value of the voltage of the terminal electrical installation and/or from its evolution in time and/or from the value of the frequency of the alternating voltage of the terminal electrical installation and/or from its evolution in time, and/or for receiving at least one remote control command by ripple control or by powerline communications, the at least one functional block exploiting the voltage of the terminal electrical installation then forming second means (3, 8) for receiving at least one remote control command;
- a functional block (4) determining the functional status of said controlled power load (12), as a function of the at least one remote control command received and/or of the at least one extracted autonomous setpoint and/or of a command from the user.

2. Device according to claim 1, **characterized in that** it further comprises means (5) for switching the power supply (6) of the power load to be controlled (12).

3. Device according to claim 1, **characterized in that** it further comprises means (11) for controlling the operation of a power load integrated into a remotely controllable apparatus (12).

4. Device according to any one of previous claims, **characterized in that** the reception of at least a first remote control command and/or the extraction of a first autonomous setpoint sets the power load in a determined functional status for an indefinite period, setting the load of in another functional status requiring the reception of at least one second remote control command and/or the extraction of a second autonomous setpoint associated with this other functional status.

5. Device according to any one of previous claims, **characterized in that** at least one change in the functional status of the power load is consecutive to the expiry of a delay time.

6. Device according to claim 5, **characterized in that** the delay time is registered in a temporal chart whose number and length of elementary steps are predetermined.

7. Device according to any one of claims 5 or 6, **characterized in that** the delay time includes at least one variable part specific to each of said device.

8. Device according to claim 7, **characterized in that** the variable part of the time delay is at least partly used as part of priority management in access to electrical power.

9. Device according to any one of claims 5 to 8, **characterized in that** the duration of all or part of the delay time is modified by the reception of at least one second remote control command over a period of time of a predetermined duration which starts from the reception of a first remote control command.

10. Device according to any one of claims 5 to 9, **characterized in that** the reception of a remote control command restarts the delay times which have not expired, the devices in which the delay time has expired being insensitive to any new reception of a remote control command during a predetermined period of time.

11. Device according to any one of previous claims, **characterized in that** it further comprises control means (13, 14) for providing the user with the possibility of imposing at least one functional status to the power load controlled by said device and/or for inhibiting at least temporarily any automatic modification of this at least one functional status.

12. System for managing an electrical network, **characterized in that** it comprises:
- a plurality of devices according to any one of claims 1 to 11 for controlling the operation of a power load belonging to a terminal electrical installation according to events which are related to the operation or management of an electrical network; and
- an electrical distribution network to which said terminal electrical installation is connected and whose voltage at the connection point is capable of allowing reception of at least one remote control command and/or the extraction of at least one autonomous setpoint in each of said devices.

13. System according to claim 12, **characterized in that** it further comprises at least one management software based on modeling of the behavior of said devices in the electrical network to help running the network and/or for automatic running of the network.

14. Method for managing an electrical network specially designed for using a plurality of devices according to any of 1 à 11 , **characterized in that** it comprises the steps during which:
- at least one remote control command is received and/or at least one autonomous setpoint is extracted from the voltage of the terminal electrical installation;
- the functional status of the power load is modified as a function of the at least one remote control command received and/or of the at least one extracted autonomous setpoint;
- the user is allowed to impose at least one functional status to the power load controlled by the said device, and/or to inhibit at least temporarily any automatic modification of at least one functional status of said power load.

15. Method according to claim 14, **characterized in that** it further comprises a step of desynchronization of at least one change of functional status of a power load controlled by said device, relatively to changes in functional status of at least one other power load controlled by at least one other said device within an electrical network having a similar effect in terms of power demand to the network.

16. Method according to any one of claims 14 to 15, **characterized in that** it further comprises a step of implementation of at least one management software based on modeling of the behavior of said devices in the electrical network to help running the network and/or for automatic running of the network.

17. Use of the method according to any one of claims 14 to 16 for allowing at every instant the maintaining of the balance between the power produced and the power consumed in an electric network by acting on the consumption by the appropriate control of a plurality of power loads.
